**Europäisches Patentamt**

**European Patent Office**

**Office européen des brevets**

(11) Veröffentlichungsnummer: **0 149 206**
**B1**

# EUROPÄISCHE PATENTSCHRIFT

(45) Veröffentlichungstag der Patentschrift:
**09.12.87**

(51) Int. Cl.⁴: **B 65 G 15/10**

(21) Anmeldenummer: **84116066.6**

(22) Anmeldetag: **21.12.84**

(54) **Vorrichtung zum Senkrechtfördern von Schüttgut.**

(30) Priorität: **19.01.84 DE 3401663**

(43) Veröffentlichungstag der Anmeldung:
**24.07.85 Patentblatt 85/30**

(45) Bekanntmachung des Hinweises auf die Patenterteilung:
**09.12.87 Patentblatt 87/50**

(84) Benannte Vertragsstaaten:
**DE FR GB NL SE**

(56) Entgegenhaltungen:
**AT - B - 339 811**
**DE - A - 2 717 100**
**DE - A - 2 722 216**

(73) Patentinhaber: **Fried. Krupp Gesellschaft mit beschränkter Haftung, Altendorfer Strasse 103, D-4300 Essen 1 (DE)**

(72) Erfinder: **Zimek, Dieter, Dipl.-Ing., Heimstättenweg 8, D-4300 Essen 1 (DE)**

**Beschreibung**

Die Erfindung betrifft eine Vorrichtung nach dem Oberbegriff des Patentanspruchs 1. Unter dem Merkmal «im wesentlichen senkrecht» werden Förderrichtungen verstanden, die bis zu 10° von der Senkrechten abweichen. Derartige Vorrichtungen werden sowohl bei Schiffsentladern auch auch zum Transport in Bergwerken verwendet.

Aus der DE-A-2 722 216 ist eine Vorrichtung zum Auf- oder Abwärtsfördern von Schüttgütern bekannt, bei der zwei Förderbänder durch eine in sich geschlossene, endlose «Kette» auf Abstand gehalten werden. Dabei besteht die «Kette» aus in Transportrichtung verlaufenden seitlichen «Holmen» und dazwischenliegenden, Kammern bildenden, quer angeordneten «Trennwänden». Zum Transport des Schüttguts ist dabei der zwischen den Förderbändern innerhalb der «Holme» und «Tragwände» liegende verbleibende Raum vorgesehen.

Nachteilig an dieser bekannten Vorrichtung ist aber, dass die «Holme» und «Transportwände» relativ voluminös ausgebildet sind und so der zum Transport des Schüttguts verbleibende Raum zwischen den Förderbändern stark eingeschränkt ist. Weiter ist es schwierig, die aus den «Holmen» und «Tragwänden» bestehende «Kette» von klebrigem Gut (wie z.B. nassem Kohlenstaub) zu reinigen. Und schliesslich müssen die länglichen «Holme» bei Richtungsänderungen der «Kette» verformt werden, wozu zusätzliche Energie erforderlich ist.

Daneben sind auch Schwingförderer bekannt, die sich zum Transport von Schüttgütern in waagerechter oder schwach geneigter Ebene eignen, wobei die geneigte Förderbahn auch die Form einer Spirale annehmen kann, so dass sich mit derartigen Schwingförderern insgesamt auch eine senkrechte Förderrichtung verwirklichen lässt. Die Fördergeschwindigkeit ist jedoch gering, so dass sich diese Einrichtung nicht für grosse Förderleistungen eignet.

Der Erfindung liegt die Aufgabe zugrunde, einen Senkrechtförderer mit grosser spezifischer Förderleistung zu schaffen, der mit flachen oder leicht strukturierten Förderbändern betrieben werden kann und bei dem durch verschiedene Umfangsgeschwindigkeiten verursachter Verschleiss an den Förderbändern vermieden wird.

Diese Aufgabe wird durch die im Anspruch 1 gekennzeichneten Merkmale gelöst. Durch den Abstand zwischen beiden Förderelementen wird ein durch Relativbewegungen verursachter Verschleiss mit Sicherheit vermieden. Indem mindestens eines der Förderelemente in auf das andere Förderelement, d.h. im allgemeinen quer zur Förderrichtung, ausgerichtete Schwingungen versetzt wird, entsteht zwischen dem betreffenden Förderelement und dem an ihm anliegenden Schüttgutteil eine Normalkraft, die die Reibkraft zwischen dem Förderelement und dem Schüttgut bzw. Fördergutteilchen und damit die Mitnahmekraft von der sich nach oben bewegenden Fläche des Förderelements auf das Fördergutteilchen vergrössert. Diese Querkraft wirkt so lange auf das Fördergutteilchen, bis dieses vom Förderelement weggeschleudert wird. Danach legt das Teilchen in Förderrichtung einen Weg bis zu dem gegenüberliegenden Förderelement zurück, von dem es in Richtung auf das erste Förderelement und ggf. mit einer Komponente in Förderrichtung zurückreflektiert wird. Die auf die einzelnen Teilchen übertragene Mitnahmekraft wird von diesen auf die übrigen Teile übertragen, so dass der Fördergutstrom insgesamt von den schwingenden Förderelementen erfasst und mitgenommen wird. Durch die auf die Schüttgutteilchen wirkende resultierende Reibkraft ist es möglich, andere Stützelemente wie z.B. Querstege zu vermeiden und daher preisgünstige glatte oder leicht strukturierte Förderbänder zu verwenden.

Günstige Förderleistungen ergeben sich, wenn das Verhältnis des Abstandes der Förderelemente voneinander zu der Schwingungsamplitude kleiner oder gleich 5 ist.

Ein bevorzugter Bereich dieses Verhältnisses liegt zwischen 3 und 5. Die Frequenz der Schwingungen in Hz liegt dabei zweckmässigerweise in einer Grössenordnung, die sich aus der Beziehung $f = 2/\sqrt{a}$ ergibt wobei a den wirksamen Abstand der Förderelemente in Metern bedeutet.

Zweckmässige Weiterbildungen der Erfindung sind in den Unteransprüchen beschrieben. So kann man einen besonders einfachen Aufbau der Vorrichtung erzielen, wenn man die Förderbänder auf einem gemeinsamen Rahmen nach Anspruch 2 anordnet und diesen insgesamt schwingen lässt.

Mit der Ausbildung einer Vorrichtung nach Anspruch 3 lässt sich die Mitnahme des Fördergutes durch die Förderbänder dadurch erhöhen, dass sie sich unabhängig voneinander in Schwingungen versetzen lassen.

Bei der Ausbildung der Vorrichtung nach Anspruch 4 ergibt sich der Vorteil, dass die schwingenden Massen und damit die Schwingungsenergie verhältnismässig klein gehalten werden können. Ausserdem kann der Vorteil genutzt werden, dass die Bänder unabhängig voneinander also z.B. mit einer zeitlichen Phasenverschiebung in Schwingungen versetzt werden können. Wenn man die Vorrichtung nach Anspruch 5 mit einer Phasenverschiebung über die Länge der Förderstrecke schwingen lässt, ergeben sich für den Förderkanal Verdickungen und Verdünnungen durch die die Mitnahme des Fördergutes günstig beeinflusst wird.

Wenn die Vorrichtung nach Anspruch 6 ausgebildet ist, erfahren die Massenteilchen durch das schneller laufende Förderband gegenüber dem langsamer laufenden Förderband eine zusätzliche Beschleunigung, die der Einwirkung der Schwerkraft entgegenwirken soll. Diese Wirkung ist insbesondere bei einer Vorrichtung von Bedeutung, bei der ein Hauptförderband in einem flachen oder waagerechten Verlauf mit Schüttgut beaufschlagt wird, da durch das andere, schneller laufende Förderband ein Stau des Schüttgutes im Bereich des Übergangs in die senkrechte Förderung vermieden werden kann.

Bei der Ausbildung eines Förderelements als Platte nach den Ansprüchen 7 und 8 ergibt sich eine besonders platzsparende und einfache Bauweise und entsprechend ein geringes spezifisches Konstruktionsgewicht. Bei einer Ausbildung der Vorrichtung nach Anspruch 9 lässt sich das Schüttgut unmittelbar zwischen die Förderbänder aufgeben, ohne dass diese ihren Verlauf änderen müssen. Ausserdem kann damit ggf. eine Verlangsamung des Gutes zum Auswurf hin erreicht werden.

Zur Einsparung von aufwendigen Einzelantrieben kann die Vorrichtung nach Anspruch 10 ausgebildet werden.

Ausführungsbeispiele des Gegenstandes der Erfindung sind in der Zeichnung dargestellt und werden im folgenden näher erläutert.

Es zeigen:

Fig. 1 eine Vorrichtung zum Senkrechtfördern von Schüttgut mit einem Haupt- und einem Nebenband,

Fig. 2 ein Förderband mit einer Stützrolle und einem Kurvenantrieb zur Schwingungserzeugung in einer auszugsweisen Darstellung,

Fig. 3 eine Welle mit drehversetzten Kurvenscheiben,

Fig. 4 eine Stützrolle mit verschieblichen Kurvenscheibenwellen zur Veränderung der Schwingungsamplitude,

Fig. 5 eine Stützrolle mit einem mit einer Unwucht versehenen Drehantrieb,

Fig. 6 einen Senkrechtförderer mit zwei auf einem gemeinsamen Rahmen angeordneten Förderbändern,

Fig. 7 einen Senkrechtförderer mit zwei Förderbändern und einer dazwischen angeordneten Schwingplatte,

Fig. 8 einen Querschnitt durch den Senkrechtförderer gemäss der Linie VIII-VIII in Fig. 7,

Fig. 9 eine Vorrichtung mit je einem fest angeordneten und einem schwingbaren Förderband und einem zusätzlichen Paar divergent verlaufender Förderbänder in einer auszugsweisen schematischen Darstellung,

Fig. 10 einen Senkrechtförderer mit seitlich zuführender Rutsche und

Fig. 11 einen Querschnitt durch den Senkrechtförderer längs der Linie XI-XI in Fig. 10.

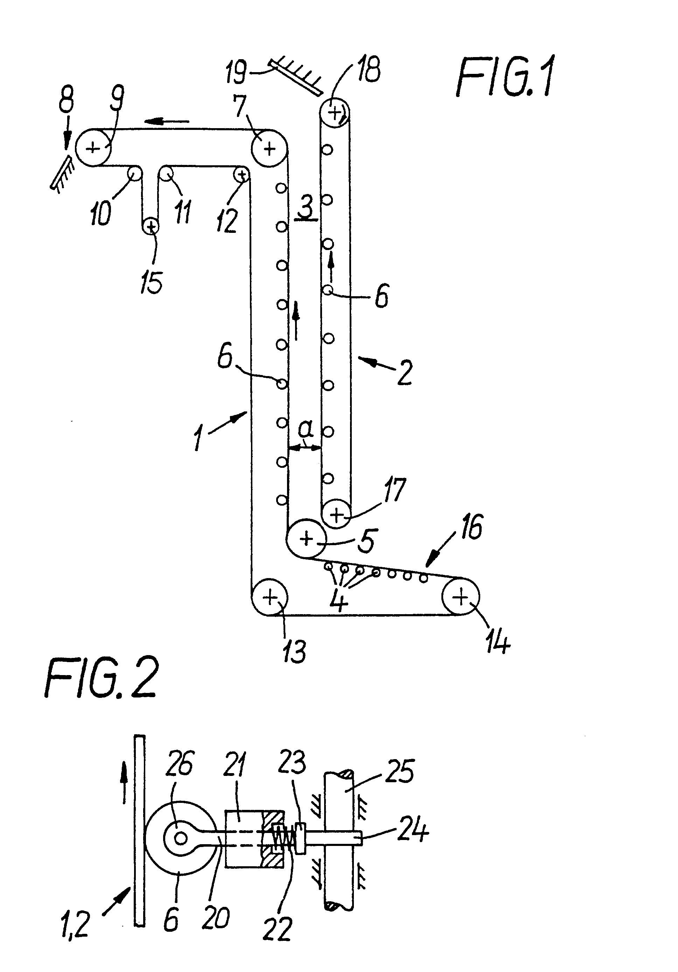

Die Vorrichtung nach Fig. 1 hat ein Hauptförderband 1 — im folgenden auch nur kurz Hauptband genannt — und ein Zusatzförderband 2 — im folgenden auch nur kurz Zusatzband genannt. Beide Bänder weisen zueinander einen Abstand a auf und bilden mit (nicht dargestellten) seitlichen Begrenzungselementen einen «Förderkanal» 3. Das Hauptband 1 ist in seinem unteren Bereich über flach angeordnete Tragrollen geführt und wird über seitlich an seinen Rändern angeordnete Umlenkscheiben 5 nach oben umgelenkt und entlang einer Vielzahl übereinander angeordneter Stützrollen 6 nach oben geführt. An seinem oberen Ende wird das Hauptband 1 an einer Umlenkrolle 7 umgelenkt und waagerecht bis zu einer Abgabestelle 8 und von dort über weitere Umlenk- und Spannrollen 9 bis 14 bzw. 15 bis zu den Tragrollen 4 geführt. Dabei ist der Bereich der Tragrollen 4 für die durch den Pfeil 16 angedeutete Aufgabe des Fördergutes vorgesehen.

Das Zusatzband 2 weist eine untere und eine obere Umlenk- bzw. Spannrolle 17, 18 und — an der Unterseite des dem Hauptband 1 zugewandten Trum — eine Vielzahl übereinander angeordnete Stützrollen 6 auf.

Im Bereich des Förderkanals 3 befindet sich unmittelbar über der Umlenkrolle 7 ein Abweiser 19, der das aufsteigende Fördergut in Richtung auf die Abgabestelle 8 umlenkt.

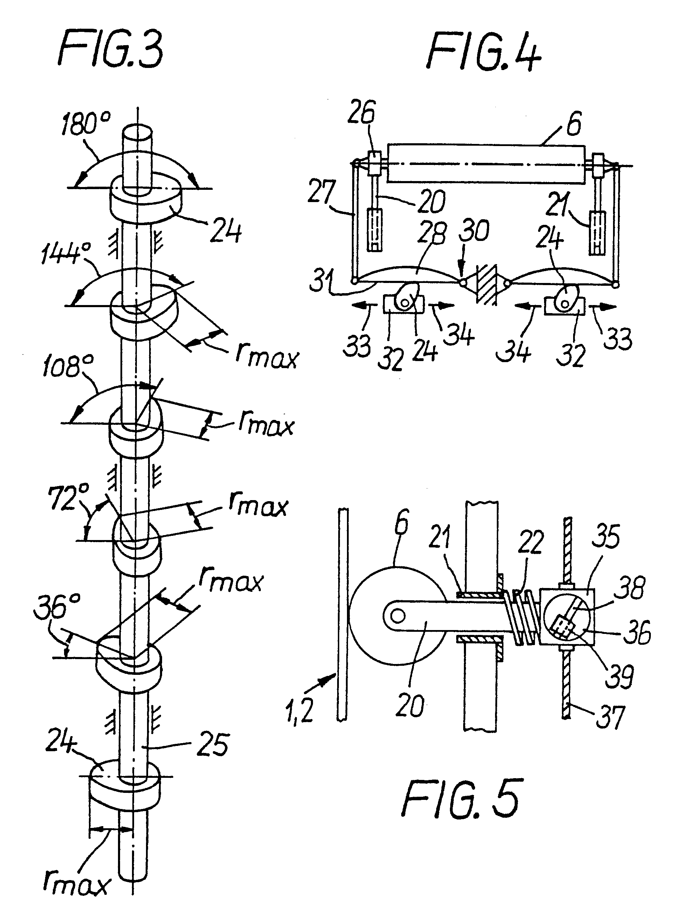

Die Stützrollen 6 der beiden Bänder 1, 2 sind an jedem Ende in einer Führungsstange 20 gelagert, die in einer fest angeordneten Gleitführung 21 hin und her bewegbar ist. An der der Stützrolle 6 gegenüberliegenden Seite der Gleitführung ist eine Druckfeder 22 vorgesehen, die sich gegen einen Kopf 23 der Führungsstange 21 abstützt und diese gegen eine Kurvenscheibe 24 drückt. Die Kurvenscheibe 24 ist auf einer drehbar gelagerten Welle 25 befestigt. Beim Drehen der Welle 25 werden die Stützrollen 6 periodisch gegen die Unterseite des dem jeweils anderen Förderband zugewandten Trum gedrückt, wobei dieser Teil der Förderbänder in Schwingungen mit über die Länge annähernd gleiche Amplitude versetzt wird. In Abwandlung des beschriebenen Ausführungsbeispiels können die Nocken, d.h. die Stellen der Kurvenscheiben 24 mit den grössten Radien $r_{max}$ gegeneinander verdreht sein. Bei dem Ausführungsbeispiel gemäss Fig. 3 ist jede Kurvenscheibe 24 gegenüber der vorangegangenen Kurvenscheibe z.B. um 36° drehversetzt angeordnet, so dass die einzelnen Stützrollen 6 nacheinander, d.h. mit einer Phasenverschiebung in Schwingungen versetzt werden.

Bei dem Ausführungsbeispiel nach Fig. 4 sind die Lager 26 der Führungsstangen 20 gelenkig mit einer Druckstange 27 verbunden, die wiederum an einen Hebel 28 angelenkt ist, der an seinem anderen, mit 30 gekennzeichneten Ende fest angelenkt ist. Eine Seite 31 des Hebels 28 steht im Eingriff mit der Kurvenscheibe 24. Die Lager 32 der die Kurvenscheiben 24 tragenden Welle 25 sind entsprechend den Pfeilen 33, 34 parallel zu der Achse der Stützrollen 6 verschiebbar angeordnet. Durch Verschieben der Lager 32 im Sinne der Pfeile 33 ergibt sich eine Verkleinerung der Amplitude der Schwingungen der Stützrollen 6, durch Verschieben der Lager 32 im Sinne der Pfeile 34 eine Vergrösserung der Schwingungsamplitude.

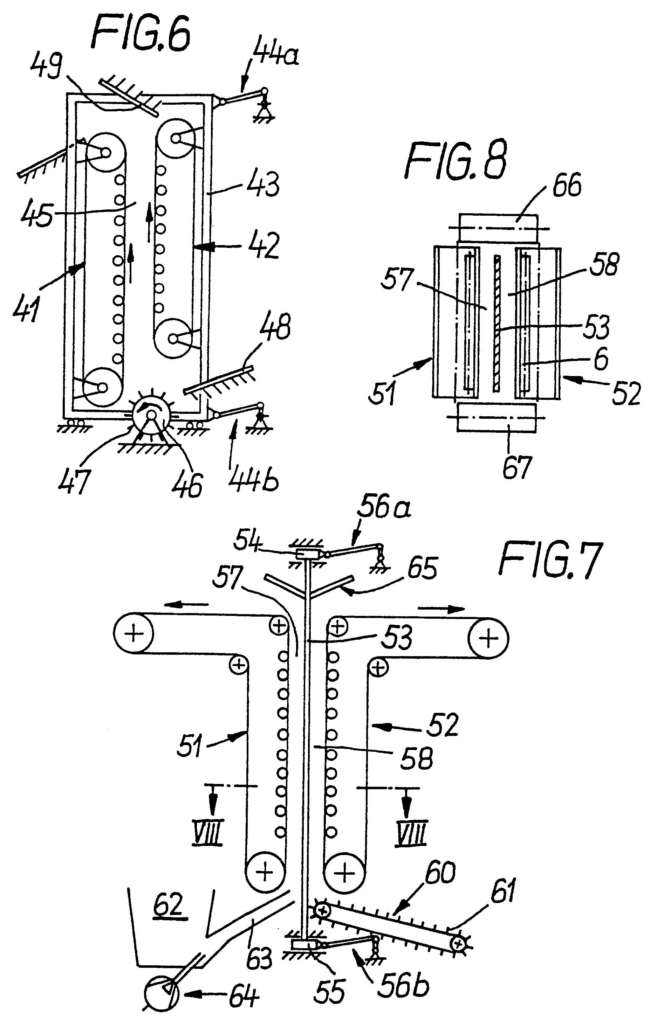

Bei dem Ausführungsbeispiel gemäss Fig. 5 befindet sich an der Führungsstange 20 der Stützrolle 6 ein Lagergehäuse 35 für eine Rotationsscheibe 36, die von einer flexiblen Welle 37 angetrieben wird. Die Rotationsscheibe 36 besitzt eine mittige Nut 38, in der ein eine Unwucht darstellender Körper 39 an einem beliebigen Radius feststellbar ist. Durch Drehen der flexiblen Welle 37 erzeugen die Unwuchtkörper 39 eine periodische Unwucht, die die Stützrollen 6 und damit das Trum des Förderbandes 1 bzw. 2 in Schwingungen versetzt. Durch Ändern der Lage des Unwuchtkörpers 39 in bezug auf den Drehpunkt der Rotationsscheibe kann die Grösse der Unwucht und damit die Schwingungsamplitude der Stützrollen 6 verändert werden. Wenn man die mittige Nut 38 der Rotationsscheibe 36 jeweils um einen bestimmten Winkel zueinander verdreht, ergibt sich auch dadurch eine Phasenverschiebung der Schwingungen über das ganze Förderband 1 bzw. 2.

In Abwandlung der beschriebenen Ausführungsbeispiele können die Stützrollen 6 auch durch hydraulische oder magnetische Einrichtungen in Schwingungen versetzt werden, wodurch teilweise eine leichtere Veränderung der Amplitude und der Phasenverschiebung ermöglicht wird.

Bei einem vereinfachten Ausführungsbeispiel gemäss Fig. 6 sind zwei Förderbänder 41, 42 auf einem gemeinsamen, waagerecht hin und her bewegbaren Rahmen 43 angeordnet, wobei der Rahmen 43 als Ganzes durch einen Schubkurbelantrieb 44a, 44b in waagerechte Schwingungsbewegungen versetzbar ist. Am unteren Ende des durch die beiden Förderbänder 41, 42 gebildeten Förderkanals 45 befindet sich eine Rolle 46, die an ihrem Umfang mit Mitnehmern 47 versehen ist und die mit hoher Drehzahl betreibbar ist. Das von einer Rutsche 48 kommende Schüttgut wird durch die Rolle 46 an das Förderband 41 geschleudert. Zur Umlenkung des Förderstromes weist die Vorrichtung an ihrem oberen Ende einen Abweiser 49 auf.

In Abwandlung des beschriebenen Ausführungsbeispiels kann jedes Förderband 41 bzw. 42 auch auf einem (nicht dargestellten) separaten Rahmen angeordnet sein, so dass beide Rahmen unabhängig voneinander in Schwingungen versetzbar sind.

In Fig. 7 ist ein weiteres Ausführungsbeispiel eines Senkrechtförderers mit zwei Förderbändern 51, 52 dargestellt. Beide Förderbänder 51, 52 werden an ihrem oberen Ende waagerecht weitergeführt. Zwischen beiden Förderbändern 51, 52 ist eine Platte 53 angeordet, die in einer oberen und einer unteren waagerechten Gleitführung 54 bzw. 55 geführt ist und durch je einen Schubkurbelantrieb 56a bzw. 56b in waagerechte Schwingungsbewegungen versetzbar ist. Durch die beiden Bänder 51, 52 und die Platte 53 sind zwei Förderkanäle 57, 58 geschaffen. Unter dem rechten Förderband 52 ist ein Zubringerband 60 mit Mitnehmern 61 angeordnet, das Fördergut mit hoher Geschwindigkeit gegen die Platte 53 schleudert, von der es gegen das sich nach oben bewegende Band 52 reflektiert wird.

Dem linken Band 51 ist ein Vorratsbehälter 62 mit einem zur Platte 53 gerichteten Auslasskanal 63 zugeordnet, in den die Auslassöffnung eines Gebläses 64 führt. Das Fördergut wird von dem Luftstrom des Gebläses 64 ergriffen und durch den Kanal 63 gegen die Platte 53 geschleudert.

An dem oberen Ende der Platte 53 befindet sich ein zweiseitiger Abweiser 65, der zur Verminderung der bewegten Massen auch fest angeordnet sein kann.

Zur zeitlichen Begrenzung der Förderkanäle können — wie auch bei den anderen Ausführungsbeispielen — Zusatzbänder 66, 67 verwendet werden.

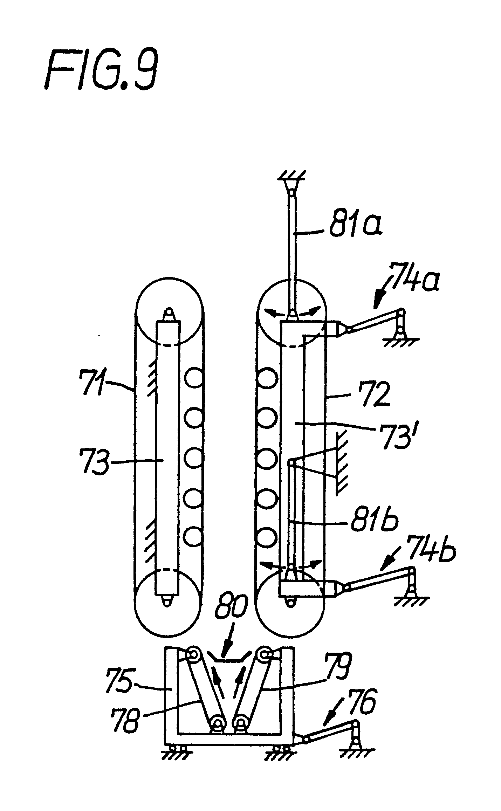

Bei dem Ausführungsbeispiel gemäss Fig. 9 ist ein Förderband 71 in einem festen Rahmen 73 und das andere Förderband 72 in einem an Pendelpaaren 81a, 81b aufgehängten, durch Schubkurbelantriebe 74a, 74b in im wesentlichen waagerechte Schwingungen versetzbaren Rahmen 73' gelagert. Die Schwingungsbewegungen des Rahmens 73' und damit des Förderbandes 72 werden somit durch einen Kreisbogen beschrieben. Wenn die Länge der Pendel 81a, 81b gegenüber der Schwingungsamplitude bzw. dem Kurbelradius der Kurbelantriebe 74a, 74b sehr grob ausgeführt ist, kann die Schwingungsbewegung als eine einer linearen Bewegung angenäherte Bewegung betrachtet werden.

Unter den Bändern 71, 72 ist ein Hilfsrahmen 75 angeordnet, der durch einen weiteren Schubkurbelantrieb 76 in waagerechte Schwingungen versetzbar ist. Der Hilfsrahmen 75 trägt zwei Förderbänder 78, 79, die an ihren unteren Enden relativ dicht beieinander sind und in der nach obengerichteten Förderrichtung einen wachsenden Abstand zueinander aufweisen. Das Schüttgut kann den beiden Förderbändern 78, 79 z.B. durch ein waagerechtes Förderband 80 zugeführt werden.

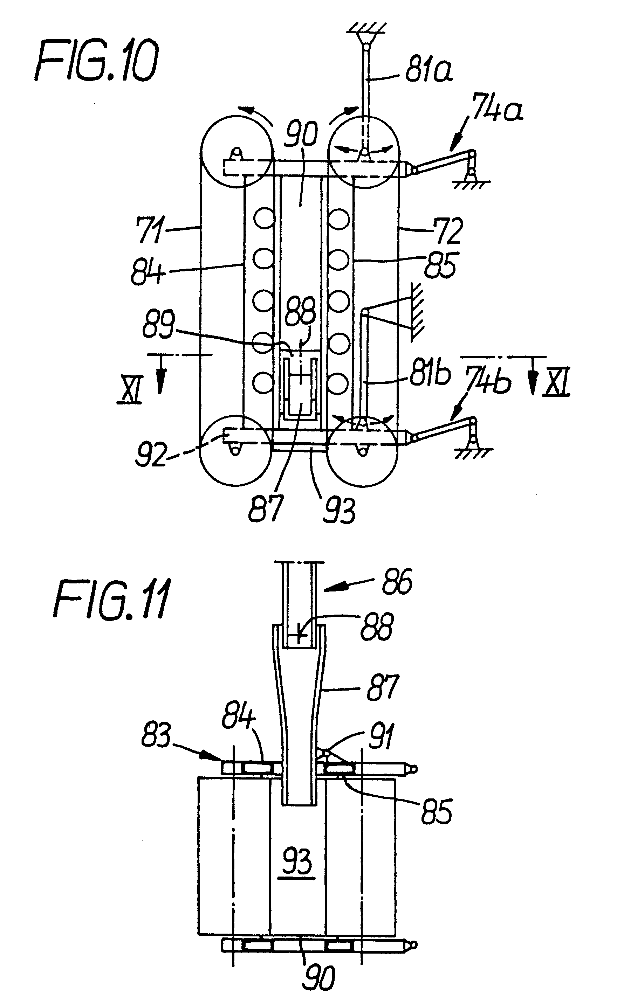

Bei dem Ausführungsbeispiel nach den Fig. 10 und 11 sind die Förderbänder 71 und 72 wiederum an einem gemeinsamen Rahmen 83 gelagert. Die seitlichen Rahmenteile weisen jeweils zwei senkrechte Träger 84, 85 auf. Der Rahmen 83 ist in der beschriebenen Weise an Pendelpaaren 81a, 81b aufgehängt und mit Hilfe von Schubkurbeltrieben 74a, 74b in quer zur Förderrichtung gerichtete Schwingungsbewegungen versetzbar. An der einen Seite des Senkrechtförderers befindet sich ein Zubringerband 86, von dem eine Rutsche 87 zum Senkrechtförderer führt. Die Rutsche 87 ist um eine am Übergabeende des Zubringerbandes 86 befindliche Achse 88 schwenkbar gelagert und reicht mit ihrem freien, schwenkbaren Ende durch die Träger 84, 85 des einen Rahmenteils und eine entsprechende Ausnehmung 89 der seitlichen Verkleidung 90 in den Förderkanal hinein. Das freie Ende der Rutsche 87 ist über eine Gelenkverbindung 91 an dem Träger 85 des einen Rahmenteils angelenkt. An den unteren waagerechten Verbindungsträgern 92 des Rahmens 83 ist ein Verschlussblech 93 angeordnet, das den Förderkanal nach unten begrenzt.

### Patentansprüche

1. Vorrichtung zum im wesentlichen senkrechten Fördern von Schüttgut mit zwei einander gegenüber angeordneten, flächenhaften Förderelementen (1, 2; 51, 52, 53), von denen mindestens eins als Förderband ausgebildet ist, wobei die Förderelemente (1, 2; 51, 52, 53) einen von Null verschiedenen Abstand (a) aufweisen, dadurch gekennzeichnet, dass mindestens einem der Förderelemente ein Schwingungserreger (24; 36,39; 74a, 74b) zur Erzeugung von Schwingungen zugeordnet ist, deren hin- und hergehende Bewegung auf das andere Förderelement gerichtet ist.

2. Vorrichtung nach Anspruch 1, dadurch gekennzeichnet, dass zwei Förderbänder (41, 42; 71, 72) auf einem gemeinsamen Rahmen (43; 83) fest angeordnet sind, der in quer zur Förderrichtung ausgerichtete Schwingungen versetzbar ist.

3. Vorrichtung nach Anspruch 1, dadurch gekennzeichnet, dass zwei Förderbänder (71, 72) jeweils fest auf einem getrennten Rahmen (73, 73') angeordnet sind, wobei mindestens ein Rahmen (73') in quer zur Förderrichtung ausgerichtete Schwingungen versetzbar ist.

4. Vorrichtung nach Anspruch 1, dadurch gekennzeichnet, dass die Umlenkrollen (5, 7; 17, 18) der Förderbänder (1, 2) fest angeordnet sind und die Stützrollen (6) mindestens eines Förderbandes (1, 2) in quer zur Förderrichtung ausgerichtete Schwingungen versetzbar sind.

5. Vorrichtung nach Anspruch 4, dadurch gekennzeichnet, dass die Schwingungen der Stützrollen (6) eine Phasenverschiebung aufweisen.

6. Vorrichtung nach einem der Ansprüche 2 bis 5, dadurch gekennzeichnet, dass die Förderbänder (1, 2; 41, 42) ungleiche Bandgeschwindigkeiten aufweisen.

7. Vorrichtung nach Anspruch 1, dadurch gekennzeichnet, dass ein Förderelement als Förderband (51) und das andere Förderelement als Platte (53) ausgebildet ist, wobei mindestens die Platte (53) in senkrecht zur Förderrichtung ausgerichtete Schwingungen versetzbar ist.

8. Vorrichtung nach Anspruch 7, dadurch gekennzeichnet, dass der Platte (53) auf ihrer anderen Seite ein weiteres Förderband (52) zugeordnet ist.

9. Vorrichtung nach einem der Ansprüche 1 bis 7, dadurch gekennzeichnet, dass der Abstand (a) zwischen den Förderelementen (79, 80) in Förderrichtung zunimmt.

10. Vorrichtung nach einem der Ansprüche 1 bis 9, dadurch gekennzeichnet, dass mindestens ein Förderband (1) zur Aufnahme und/oder zum Weitertransport des Schüttgutes teilweise einen nicht senkrecht nach oben gerichteten Verlauf nimmt.

## Claims

1. A device for the substantially vertical conveying of bulk material, having two oppositely disposed areal conveyor elements (1, 2; 51, 52, 53), at least one of which takes the form of a conveyor belt, the conveying elements (1, 2; 51, 52, 53) having a distance apart (a) differing from zero, characterized in that associated with at least one of the conveying elements is a vibration exciter (24; 36, 39; 74a, 74b) for generating vibrations whose horizontal reciprocation is directed towards the other conveyor element.

2. A device according to Claim 1, characterized in that two conveyor belts (41, 42; 71, 72) are disposed fixed on a common frame (43; 83) which can be set in vibration transversely of the conveying direction.

3. A device according to Claim 1, characterized in that two conveyor belts (71, 72) are each disposed fixed on a separate grame (73, 73′), and at least one frame (73′) can be set in vibration transversely of the conveying direction.

4. A device according to Claim 1, characterized in that the deflecting pulleys (5, 7; 17, 18) of the conveyor belts (1, 2) are disposed fixed and the supporting rollers (6) of at least one conveyor belt (1, 2) can be set in vibration transversely of the conveying direction.

5. A device according to Claim 4, characterized in that the vibrations of the supporting rollers (6) have a phase displacement.

6. A device according to one of Claims 2 to 5, characterized in that the conveyor belts (1, 2; 41, 42) have different belt speeds.

7. A device according to Claim 1, characterized in that one conveyor element takes the form of a conveyor belt (51) and the other conveyor element the form of a plate (53), and at least the plate (53) can be set in vibration perpendicularly of the conveying direction.

8. A device according to Claim 7, characterized in that another conveyor belt (52) is associated with the plate (53) on its other side.

9. A device according to one of Claims 1 to 7, characterized in that the distance apart (a) of the conveyor elements (79, 80) increases in the conveying direction.

10. A device according to one of Claims 1 to 9, characterized in that at least one conveyor belt (1) for receiving and/or further conveying the bulk material partly follows a course not directed perpendicularly upwards.

## Revendications

1. Dispositif de transport sensiblement vertical de matières en vrac qui comprend deux éléments de transport (1, 2; 51, 52, 53) qui présentent des surfaces et qui sont placés l'un en face de l'autre, dont l'un au moins est constitué par une bande transporteuse, ces éléments de transport (1, 2; 51, 52, 53) étant séparés par une distance (a) non nulle, caractérisé en ce qu'à l'un au moins des éléments de transport est associé un appareil générateur d'oscillations (24; 36, 39; 74a, 74b) pour la production d'oscillations dont le mouvement de va-et-vient est dirigé vers l'autre élément de transport.

2. Dispositif selon la revendication 1, caractérisé en ce que deux bandes transporteuses (41, 42; 71, 72) sont montées solidement sur un cadre commun (43; 83) qui peut être déplacé par des oscillations orientées transversalement par rapport à la direction de transport.

3. Dispositif selon la revendication 1, caractérisé en ce que deux bandes transporteuses (71, 72) sont montées chacune sur un cadre séparé (73, 73′), l'un au moins des cadres (73′) pouvant être déplacé dans des oscillations orientées transversalement par rapport à la direction de transport.

4. Dispositif selon la revendication 1, caractérisé en ce que les rouleaux de renvoi (5, 7; 17, 18) des bandes transporteuses (1, 2) sont montés à poste fixe et que les rouleaux d'appui (6) de l'une au moins des bandes transporteuses (1, 2) peut être déplacée par des oscillations orientées transversalement par rapport à la direction de transport.

5. Dispositif selon la revendication 4, caractérisé en ce que les oscillation des rouleaux d'appui (6) présentent un décalage de phase.

6. Dispositif selon l'une des revendications 2 à 5, caractérisé en ce que les bandes transporteuses (1, 2; 41, 42) ne se déplacent pas à la même vitesse.

7. Dispositif selon la revendication 1, caractérisé en ce que l'un des éléments de transport est une bande transporteuse (51) et l'autre élément de transport, une plaque (53), la plaque (53) au moins pouvant être déplacée par des oscillations orientées perpendiculairement à la direction de transport.

8. Dispositif selon la revendication 7, caractérisé en ce qu'à la plaque (53) est associée, sur son autre côté, à une bande transporteuse (52).

9. Dispositif selon l'une des revendications 1 à 7, caractérisé en ce que la distance (a) entre les éléments de transport (79, 80) augmente dans le sens du transport.

10. Dispositif selon l'une des revendications 1 à 9, caractérisé en ce qu'au moins une bande transporteuse (1), qui reçoit et/ou transporte les matières en vrac, suit, dans une de ses parties, un trajet qui n'est pas orienté verticalement vers le haut.

# FIG.1

# FIG.2

0 149 206

# FIG.3

# FIG.4

# FIG.5

9

# FIG.6

49  44a

45  43

42

41

48

47  46  44b

# FIG.8

66

57  58

53

6

51  52

67

# FIG.7

56a

54  65

57

53

52

51  58

VIII  VIII

62  60

61

63

64  55  56b

11

# FIG.9

0 149 206

FIG.10

FIG.11